# EUROPEAN PATENT APPLICATION

(11) **EP 3 754 489 A1**
(43) Date of publication of application: **23.12.2020**
(21) Application number: 18919504.3
(22) Date of filing: 23.05.2018
(51) Int. Cl.: G06F 9/445

(54) **METHOD FOR EVALUATING APPLICATION DEPLOYMENT, APPARATUS, COMPUTER PROGRAM PRODUCT, AND READABLE MEDIUM**

(71) Applicant: Siemens Aktiengesellschaft, 80333 München (DE)
(72) Inventor: MA, Wanli, Beijing 101300 (CN); YUAN, Yong, Beijing 102208 (CN)
(74) Representative: Isarpatent
(86) International application number: PCT/CN2018/088029
(87) International publication number: WO 2019/222941

(57) **Abstract**

A method for evaluating application deployment, an apparatus, a computer program product, and a readable medium are provided. The method for evaluating application deployment includes: acquiring, in response to a request for deploying a first application to a physical apparatus, application information related to the first application and apparatus information related to the physical apparatus (310), the apparatus information at least indicating a second application that has been deployed on the physical apparatus; creating a simulation environment on the basis of the application information and the apparatus information (320), the simulation environment simulating a running environment of the physical apparatus after the first application and the second application are deployed; and acquiring, by means of running the first application and the second application in the simulation environment, an evaluation result related to the first application (330), the evaluation result indicating the impact of deploying the first application to the physical apparatus on the second application. The method can actively and effectively prevent risky application deployment, and eliminates the requirement for manual monitoring.

## Description

### BACKGROUND

### Technical Field

An embodiment of the disclosure relates to the field of computers, and more particularly relates to a method for evaluating application deployment, an apparatus, a computer program product, and a readable medium.

### Related Art

A physical apparatus (such as a computer) is generally deployed with one or more applications to perform corresponding functions. According to requirements, a user may make a request to an application provider, for example, an application server, to download and install more applications on the physical apparatus, thereby enabling the apparatus to perform more expected functions by utilizing the applications.

Generally, the application server directly deploys the application to the corresponding apparatus in response to the user request. However, the newly deployed application may impact the normal running of the application that has been deployed on the apparatus. This is not expected in various scenarios, particularly if the impacted application needs to be in charge of a core function of this apparatus. By aiming at this problem, an application designer is generally required to predict a running environment of the application as much as possible during development, so as to avoid conflicts with other applications in different environments. Such laboratory prediction is generally finite, and cannot be configured to test all real running environments. Therefore, in practical deployment, the adverse impact of one application on another application still often occurs. A possible solution to the adverse impact is that the user actively removes the new application from the apparatus or prohibits the running of the new application after discovering that the existing application is impacted, thereby ensuring that the application in charge of an important function can run normally.

### SUMMARY

In order to avoid an adverse impact among deployment of applications on the same apparatus, an existing application deployment solution requires a user to pay attention to a running condition of the application in real time after application deployment, and unnecessary loss may be caused since the user cannot timely discover the adverse impact. In view of this, it is advantageous to evaluate the impact of application deployment in advance before practical deployment of the application. An embodiment of the disclosure provides such a solution for evaluating application deployment in advance.

In a first aspect of the disclosure, a method for evaluating application deployment is provided. The method includes: acquiring, in response to a request for deploying a first application to a physical apparatus, application information related to the first application and apparatus information related to the physical apparatus, the apparatus information at least indicating a second application that has been deployed on the physical apparatus; creating a simulation environment on the basis of the application information and the apparatus information, the simulation environment simulating a running environment of the physical apparatus after the first application and the second application are deployed; and acquiring, by means of running the first application and the second application in the simulation environment, an evaluation result related to the first application, the evaluation result indicating the impact of deploying the first application to the physical apparatus on the second application.

Through the embodiment of the disclosure, by automatically evaluating whether the application will impact the application that has been deployed to the apparatus or not before practical deployment of this application, risky application deployment can be actively and effectively prevented, and the requirement for manual monitoring is eliminated.

In some embodiments, acquiring the evaluation result related to the first application includes: determining a first test case and a second test case respectively corresponding to the first application and the second application, the first test case and the second test case respectively specifying test inputs, running conditions and expected outputs of the first application and the second application; generating a test plan on the basis of the first test case and the second test case, the test plan specifying running processes of the first test case and the second test case in the simulation environment; and running the test plan in the simulation environment to acquire the evaluation result. Through automatic generation of the test plan, different inputs, running conditions and outputs of the first application and the second application can be tested in the simulation environment, so that the impact of the deployment of the first application can be comprehensively and reliably evaluated.

In some embodiments, at least one of the first test case and the second test case is created and stored in advance. This can avoid time consumption of real-time design of the test cases, and the test case corresponding to the same application can be repeatedly utilized.

In some embodiments, the physical apparatus is a first physical apparatus, and creating the simulation environment includes configuring a second physical apparatus as the simulation environment. The second physical apparatus is different from the first physical apparatus. The purpose of applying a separate physical apparatus to application evaluation is that the impact of the application evaluation on the physical apparatus of interest can be avoided. Additionally, the separate physical apparatus can be repeatedly used for deployment evaluation on different physical apparatuses or different applications.

In some embodiments, configuring the second physical apparatus includes: deploying the first application and the second application to the second physical apparatus; and configuring the second physical apparatus on the basis of the application information and the apparatus information. By such a mode, the second physical apparatus can be configured, in aspects of software and hardware performance, to be similar to the condition of the first physical apparatus after the first application and the second application are deployed, so that the impact on the second application after the first application is deployed can be more accurately and reliably evaluated.

In some embodiments, the application information indicates an identification of the first application and resource requirements of the first application. In some embodiments, the apparatus information indicates an available resource of the physical apparatus and an unoccupied resource in the available resource. The available resource includes at least one of a computing resource, a storage resource and a communication resource. Such application information and/or apparatus information can help make the simulation environment to be created similar to a possible real environment on the physical apparatus.

In some embodiments, acquiring the evaluation result related to the first application includes: determining, by means of running the first application and the second application in the simulation environment, whether the second application will experience a resource shortage or a running fault or not; and generating, in response to determining that the second application will experience the resource shortage or the running fault, the evaluation result so as to indicate that deploying the first application on the physical apparatus will impact the second application. The impact of the first application on the second application may be reflected in that the second application does not have sufficient running resources or the normal running of the second application is impacted due to the occupation of resources on the physical apparatus. By judging whether this unexpected condition will occur or not in the simulation environment and indicating this unexpected condition through the evaluation result, the practical impact on the second application can be favorably avoided.

In some embodiments, the method further includes deploying, in response to the evaluation result indicating no impact of deploying the first application to the physical apparatus on the second application, the first application to the physical apparatus. In an embodiment, deploying the first application to the physical apparatus includes triggering the first application to be downloaded from an application server to the physical apparatus. Therefore, under the condition of confirming that the deployment of the first application is safe, the first application can be actually deployed to the physical apparatus (for example, downloaded from the application server to the physical apparatus).

In some embodiments, the physical apparatus is included in an Internet of things (IoT) system. Therefore, favorable risky application deployment evaluation can be provided for an apparatus in the IoT system, and the requirement for manual monitoring is eliminated.

In a second aspect of the disclosure, an electronic apparatus is provided. The electronic apparatus includes a processor and a memory coupled with the processor. The memory has an instruction stored therein. When executed by the processor, the instruction enables the electronic apparatus to perform an action. The action includes: acquiring, in response to a request for deploying a first application to a physical apparatus, application information related to the first application and apparatus information related to the physical apparatus, the apparatus information at least indicating a second application that has been deployed on the physical apparatus; creating a simulation environment on the basis of the application information and the apparatus information, the simulation environment simulating a running environment of the physical apparatus after the first application and the second application are deployed; and acquiring, by means of running the first application and the second application in the simulation environment, an evaluation result related to the first application, the evaluation result indicating the impact of deploying the first application to the physical apparatus on the second application.

In a third aspect of the disclosure, an apparatus for evaluating application deployment is provided, and includes a module configured to perform steps in each embodiment according to the method in the first aspect.

In a fourth aspect of the disclosure, a computer program product is provided. The computer program product is physically stored on a computer readable medium, and includes a computer executable instruction. When executed, the computer executable instruction enables at least one processor to perform each embodiment according to the method in the first aspect.

In a fifth aspect of the disclosure, a computer readable medium is provided. A computer executable instruction is stored thereon. When executed, the computer executable instruction enables at least one processor to perform each embodiment according to the method in the first aspect.

The content part of the disclosure provided herein is merely used for introducing the selection of concept in a brief manner, and is further described in the following specific implementations. The content part of the disclosure is not intended to mark key features or main features of the disclosure, and is also not intended to limit the scope of the disclosure.

### BRIEF DESCRIPTION OF THE DRAWINGS

The following further describes the characteristics, technical features, advantages, and implementations of the disclosure by describing the exemplary embodiments in a clear and understandable manner with reference to the accompanying drawings:
Figure 1 shows a schematic diagram of an environment for conventional application deployment;
Figure 2 shows a schematic diagram of an environment for application deployment according to an embodiment of the disclosure;
Figure 3 shows a flow diagram of a process for evaluating application deployment according to an embodiment of the disclosure;
Figure 4 shows a schematic diagram of an environment for application deployment according to another embodiment of the disclosure;
Figure 5A shows a flow diagram of a process for simulating application running according to an embodiment of the disclosure;
Figure 5B shows a flow diagram of a process for generating and utilizing an evaluation result according to an embodiment of the disclosure;
Figure 6 shows a schematic diagram of an environment for application deployment according to yet another embodiment of the disclosure; and
Figure 7 shows a block diagram of an example apparatus which can be configured to implement embodiments of the disclosure.

### DETAILED DESCRIPTION

The following describes a principle of the disclosure with reference to various exemplary embodiments shown in the accompanying drawings. Although the exemplary embodiments of the disclosure are displayed in the accompanying drawings, but it should be understood that the embodiments described herein are merely used enabling a person skilled in the art to better understand and further implement the disclosure, and are not used for limiting the scope of the disclosure in any manner.

The term "include" and variants thereof used in this specification represent open including, namely, "include but is not limited to". Unless otherwise stated, the term "or" represents "and/or", the term "based on" represents "at least partially based on", the terms "one exemplary embodiment" and "one embodiment" represent "at least one exemplary embodiment", the term "another embodiment" represents "at least one other embodiment", and the terms "first", "second", and the like may indicate different or same objects. The following may further includes other specific and implicit definitions.

As mentioned above, a user may make a request to an application server to deploy an application to a physical apparatus.

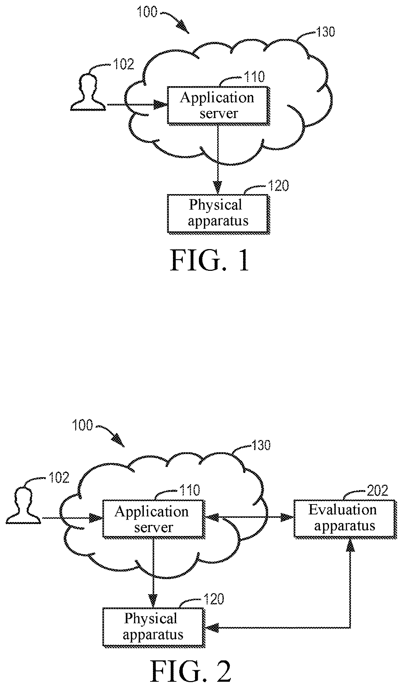

Figure 1 shows such an environment 100 for conventional application deployment. As shown in Figure 1, the environment 100 includes an application server 110 and a physical apparatus 120. In an example in Figure 1, the application server 110 is deployed in a cloud 130.

The cloud 130 may be a public cloud or a private cloud, and is configured to concentratedly manage and utilize software and hardware resources deployed therein, so as to provide various functions and/or service, such as data storage, sharing, computing and analysis, for an organization and/or an individual. The cloud 130 may also be called as a network on the basis of the cloud. Software and/or hardware resources in the network can be interconnected, and can be accessed by an external apparatus and a user. The environment 100 on the basis of the cloud 130 can realize real-time communication of the user, the apparatus and a product, and build a highly flexible personalized and digital intelligent ecosystem.

In the cloud 130, the application server 110 is configured to manage various applications. As used herein, the application refers to software compiled to realize a specific function. When installed on a specific apparatus, the application may run, so as to realize a corresponding function, such as data collection control, data processing, arithmetical operation, flow process management and social functions. It should be understood that what are provided herein are merely some non-limiting examples of functions provided by the application, and the application may be designed to realize various expected functions according to requirements.

Applications managed by the application server 110 may be provided by a plurality of sources (for example, different developers, application providers, etc.). The application server 110 may maintain installation files and application profiles of these applications, and control uploading, compliance, downloading, updating, etc. of these applications. Therefore, the application server 110 may also be called as an application store sometimes. A user 102 may make a request to the application server 110 to deploy the specific application to the physical apparatus 120. The user 102 may, for example, send a request to the application server 110 via an input apparatus (for example, a user interface) of the application server 110 or via a user terminal apparatus. In some examples, the user 102 may also be a user of the physical apparatus 120. In response to the request from the user 102, the application server 110 downloads the corresponding application to the physical apparatus 120. The physical apparatus 120 can run this application, so as to realize a corresponding function by utilizing this application.

The physical apparatus 120 can access the cloud 130, particularly the application server 110 therein. The physical apparatus 120 may be any one apparatus with computing and communication capabilities. As a non-limiting example, the physical apparatus 120 may be any type of fixed apparatus, mobile apparatus or portable apparatus, including a desk computer, a laptop computer, a notebook computer, a netbook computer, a tablet computer, a multimedia computer, a multimedia tablet computer, an Internet node, a mobile phone, a station, an Internet of things apparatus, etc. The physical apparatus 120 may be a user terminal, or may be an apparatus arranged in an industrial site, such as a control apparatus of devices of a motor, a sensor, etc., an apparatus for data analysis and computing, and an apparatus for operation instruction control and sending.

In some implementations, the cloud 130 including the application server 110 and the apparatus connected with the cloud may be called as an Internet of things (IoT) system. It should be understood that the environment of Figure 1 is shown for a description purpose. The arrangement and quantity of apparatuses shown in Figure 1 are schematic. Under other conditions, a plurality of physical apparatuses 120 may be connected to and access the cloud 130. The application server 110 may also be configured to deploy the same application or different applications to different physical apparatuses in response to the requests from a plurality of users. Although the cloud 130 is shown only including the application server 110, other software and/or hardware resources may also be deployed in the cloud 130. The scope of the disclosure is not limited in this aspect. It should be further understood that although described in the environment on the basis of the cloud, the implementation of the disclosure is actually not limited thereto, and the disclosure may be implemented in other different types of environments (for example, an environment irrelevant to the network on the basis of the cloud).

In conventional application development, the application requested by the user is directly deployed to the physical apparatus, and is, for example, installed or runs on the physical apparatus. However, the newly deployed application may impact the normal running of the application that has been deployed on the apparatus. If the impacted application is in charge of a core function of this apparatus, this is not expected. Although the user can remove (for example, unload) the newly deployed application or prohibit the running of this application when discovering that an important application is impacted, as mentioned above, this requires the user to pay attention to the running condition of the application in real time after application deployment, and unnecessary loss may be caused since the user cannot timely discover the impact of the application. Under many conditions, real-time attention to the running state may be difficult to realize, or the discovery of the adverse impact on the application may lag behind. For example, in an industrial site, the quantity of the apparatuses requiring application deployment is greater, and the installing positions of the apparatuses do not support real-time monitoring, and these reasons may all cause the user to be unable to timely remove or disenable the unexpected application.

Thus, it can be seen that a direct application deployment solution may bring a great potential risk. Therefore, it is advantageous to evaluate the impact of application deployment in advance before practical deployment of the application. According to the embodiment of the disclosure, a solution for evaluating application deployment is provided. This solution requires that the impact of the requested application on the application that has been deployed on the physical apparatus is evaluated before this application is deployed to the physical apparatus. Such an evaluation result can be configured to assist to determine whether the requested application should be practically deployed to the physical apparatus or not, so as to avoid risky application deployment.

Figure 2 shows a schematic diagram of an environment 100 for application deployment according to an embodiment of the disclosure. On the basis of the environment 100 shown in Figure 1, according to the embodiment of the disclosure, an evaluation apparatus 202 is provided, and is configured to evaluate the impact of an application on the application that has been deployed to the physical apparatus 120 when the application server 110 receives a request for deploying this application to the physical apparatus 120 from a user 102. The evaluation apparatus 202 is configured to be in communication connection with the application server 110 and the physical apparatus 120, so as to receive information from the application server 110 and the physical apparatus 120 and send information to the application server 110 under some conditions. Such communication connection may be wired or wireless connection. The evaluation apparatus 202 may include an apparatus or a server with communication and computing capabilities. It should be understood that although shown as a separate apparatus, the evaluation apparatus 202 may be deployed in the cloud 130 or integrated into the application server 110.

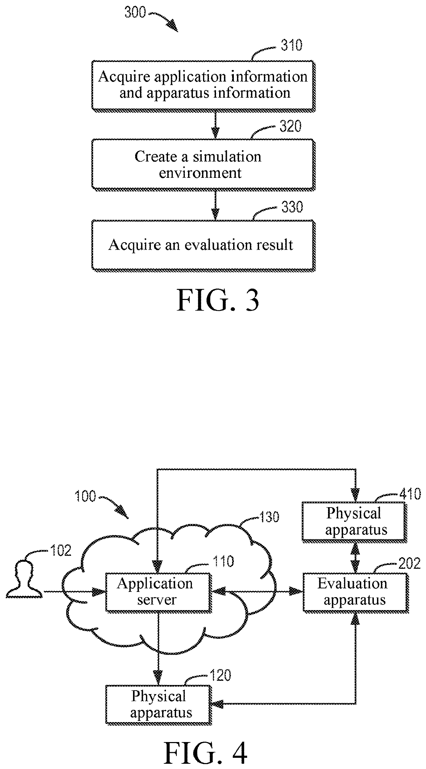

An evaluation process in the evaluation apparatus 202 will be discussed below in detail with reference to Figure 3. Figure 3 shows a flow diagram of a process 300 for evaluating application deployment according to an embodiment of the disclosure. The process 300 may be implemented by the evaluation apparatus 202.

In a block 310, the evaluation apparatus 202 acquires application information related to an application (called as a first application for convenient description) and apparatus information related to the physical apparatus 120. The acquisition of the application information and the apparatus information may be in response to the request for deploying the first application to the physical apparatus 120. For example, after receiving a request from such a source (for example, a request from the user 102), the application server 110 may actively send the application information of the first application to the evaluation apparatus 202, and indicates an expectation of evaluating the impact of the first application on the application that has been deployed on the physical apparatus 120 to the evaluation apparatus 202. The evaluation apparatus 202 receives the application information from the application server 110, and requests and receives the apparatus information from the physical apparatus 120.

The application information related to the first application may also be called as an application profile of the first application, and is configured to describe one or more aspects of the first application. In some embodiments, the application information related to the first application indicates an identification of the first application. This identification may be configured to distinguish the first application in the application server 110 and the physical apparatus 120. The application information may further indicate running requirements, such as resource requirements, of the first application. Generally, when running on the apparatus, the application needs to occupy a certain quantity of resources on this apparatus. Under some conditions, only a specific resource quantity and a proper resource type can support the normal running of the application. Therefore, the application information can indicate the requirements of the first application for the types and/or quantities of various resources.

In some embodiments, the resources related to the running of the first application may include one or more of a computing resource (such as, a processor of the apparatus, including a central processing unit (CPU) and a dedicated processing unit such as a graphics processing unit (GPU) and a field-programmable gate array (FPGA)), a storage resource and a communication resource. The storage resource includes an apparatus memory, a flash memory, a persistent storage space, etc. The communication resource may include an apparatus internal communication resource, for example, a general input/output (I/O) interface and a bus, and/or an apparatus external communication resource such as an Ethernet port.

The apparatus information related to the physical apparatus 120 describes one or more aspects of the physical apparatus 120. The apparatus information at least indicates an identification of an application (called as a second application for convenient description) that has been deployed on the physical apparatus 120. This identification may be configured to distinguish the second application in the application server 110 and the physical apparatus 120. In some embodiments, the physical apparatus 120 may be deployed with a plurality of applications. Under such conditions, the apparatus information may include identifications of a plurality of applications. In another embodiment, the apparatus information may include the identification(s) of one or more applications in charge of a key task on the physical apparatus 120. For example, if the physical apparatus 120 is configured to perform machine control, in order to realize this task, an application for sensor control and an application for sensor data analysis are deployed on the physical apparatus 120. The apparatus information may include the identifications of these two applications.

Additionally, the apparatus information may further indicate a resource condition of the physical apparatus 120, such as an available resource and an unoccupied resource of the physical apparatus 120. The available resource refers to a practically disposable resource of the physical apparatus 120, and includes one or more of a computing resource, a storage resource and a communication resource. The unoccupied resource refers to an unoccupied part in the practically disposable resource, because a part of resources of the physical apparatus 120 may be occupied by the application that has been deployed and/or an operating system.

It should be understood that what are provided herein are merely some non-limiting examples of the application information and the apparatus information. In other embodiments, the application information and the apparatus information may include other related information of the first application and the physical apparatus. For example, the application information may further include the requirements of the first application in aspects of operating system types, network types, etc. The apparatus information may also include information in aspects of operating system types, apparatus types, apparatus models, etc.

In a block 320, the evaluation apparatus 202 creates a simulation environment on the basis of the acquired application information and apparatus information. The simulation environment simulates a running environment of the physical apparatus 120 after the first application and the second application are deployed. In order to avoid impacting the running environment of the physical apparatus 120 per se, the simulation environment of the practical running environment independent of the physical apparatus 120 can be created for evaluating the first application. In order to accurately and reliably evaluate the impact of the first application on the second application, the simulation environment can be created to be similar to the running environment of the physical apparatus 120 as much as possible after the first application and the second application are deployed. For example, the simulation environment is similar to the running environment of the physical apparatus 120 in aspects of application deployment, hardware conditions, network conditions, etc.

In some embodiments, by utilizing resources (including the computing resource, the storage resource, the communication resource, etc.) available on the evaluation apparatus 202, the simulation environment can be created on the evaluation apparatus 202. In some other embodiments, the evaluation apparatus 202 can create the simulation environment by utilizing another physical apparatus. For convenient distinguishment, the physical apparatus 120 is called as a first physical apparatus sometimes, and the physical apparatus for creating the simulation environment may be called as a second physical apparatus sometimes. The second physical apparatus is different from the first physical apparatus, so as to avoid the impact of the application evaluation on the first physical apparatus. Additionally, the separate second physical apparatus may further be repeatedly configured to perform deployment evaluation on different physical apparatuses or different applications.

Figure 4 shows an example of an environment 100 according to such an embodiment. In the environment 100 shown in Figure 4, a physical apparatus 410 is provided as a second physical apparatus. The physical apparatus 410 is configured to be in communication connection with the evaluation apparatus 202 and the application server 110. The evaluation apparatus 202 configures the physical apparatus 410 as a simulation environment on the basis of application information and apparatus information. For a simulation purpose, the physical apparatus 410 will be configured to be the same as or similar to the physical apparatus 120 in a plurality of aspects, for example, in aspects of operating system, storage and/or computing capabilities, etc. In an example, the physical apparatus 410 may even be selected as an apparatus of the same model as the physical apparatus 120. The evaluation apparatus 202 may determine simulation requirements of the physical apparatus 410 in various aspects, such as application deployment, resource types, available resource quantity and operating system types, on the basis of the application information and the apparatus information.

Specifically, the evaluation apparatus 202 may deploy the first application and the second application to the physical apparatus 410. For example, the evaluation apparatus 202 may provide identifications of the first application and the second application to the physical apparatus 410, and triggers the physical apparatus 410 to download the first application and the second application from the application server 110. In another example, the evaluation apparatus 202 may also make a request to the application server 110 to directly deploy the first application and the second application to the physical apparatus 410. The evaluation apparatus 202 further configures the second physical apparatus on the basis of the application information and the apparatus information, including configuring the available resource quantity and the resource type of the physical apparatus 410 in a subsequent application evaluation process, and the operating system types, apparatus types, etc. shown by the second physical apparatus to the application that has been deployed. The evaluation apparatus 202 may convert the application information and the apparatus information into corresponding configuration parameters, and provide these parameters to the physical apparatus 410. The physical apparatus 410 may regulate the configuration of the apparatus per se on the basis of the received parameters, thereby simulating the running environment of the physical apparatus 120.

With continuous reference to Figure 3, in a block 330, the evaluation apparatus 202 acquires, by means of running the first application and the second application in the simulation environment, an evaluation result related to the first application. The evaluation result indicates the impact of deploying the first application to the physical apparatus 120 on the second application. By means of running the first application and the second application in the simulation environment, even if the first application will impact the second application, such running cannot practically damage the real running environment in the physical apparatus 120.

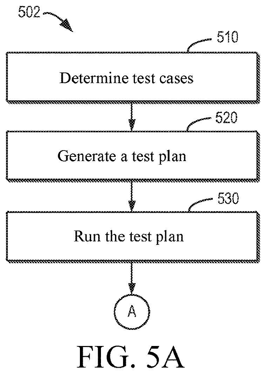

In some embodiments, in order to better test different inputs, running conditions and outputs of the first application and the second application so as to comprehensively and reliably evaluate the impact of the deployment of the first application, the application can run on the basis of test cases. Figure 5A shows a flow diagram of a process 502 for application deployment evaluation according to another embodiment of the disclosure. The process 502 may be regarded as an example of acquiring the evaluation result in the process 300. The process 502 may also be implemented by the evaluation apparatus 202.

In a block 510, the evaluation apparatus 202 determines a first test case and a second test case respectively corresponding to the first application and the second application. In an embodiment where the physical apparatus 410 is configured as the simulation environment, the evaluation apparatus 202 may provide the determined test case to the physical apparatus 410. In some other embodiments, the evaluation apparatus 202 may further function as a control device to trigger the physical apparatus 410 to determine the test cases of the first application and the second application.

The first test case and the second test case respectively specify test inputs, running conditions and expected outputs of the first application and the second application. In the simulation environment, the first application and the second application may not acquire real application inputs, so that the test inputs and the corresponding running conditions can be given by designing the test cases. According to such test cases, under the specific running conditions, the test inputs are provided to the corresponding application, and the outputs after the application runs are recorded. If the outputs are identical to the expected outputs, it is regarded that the running of the application is normal. Otherwise, it can be determined that the application makes an error. The design of the test cases may be realized by using any currently known or to-be-developed technologies in the field of software testing, and the scope of the disclosure is not limited in this aspect.

The test cases of the first application and/or the second application can be created and stored in advance, for example, stored in a memory pool. The application provided by the application server 110 can be deployed to a plurality of different physical apparatuses, so that the time consumption of real-time design of the test cases can be avoided by creating and storing the test cases for these applications in advance, and the pre-stored test cases can be repeatedly used for different application deployment evaluation processes.

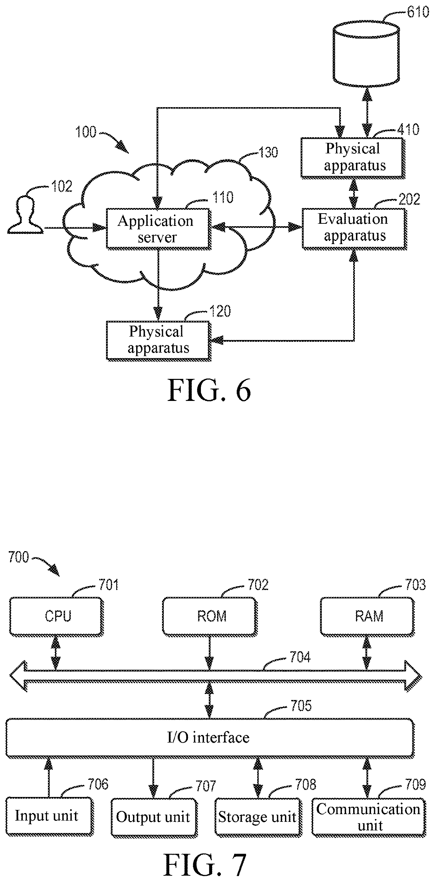

Figure 6 shows an example of an environment 100 in which test cases created in advance can be provided. In the environment 100 shown in Figure 6, a memory pool 610 is provided, and is configured to store the test cases created in advance and respectively corresponding to each application. In the example of Figure 6, the memory pool 610 is shown in communication connection with the physical apparatus 410. Although shown in the figure as independent of the cloud 130, in other embodiments, the memory pool 610 may be deployed in the cloud 130 as a part of the cloud 130. The physical apparatus 410 may acquire the test cases of the first application and/or the second application from the memory pool 610 in response to the triggering of the evaluation apparatus 202. In some embodiments, the memory pool 610 can be optionally or additionally configured to be in communication connection with the evaluation apparatus 202. In such embodiments, the test cases may be acquired from the memory pool 610 by the evaluation apparatus 202 and provided to the apparatus 410.

In some embodiments, the memory pool 610 stores the test cases and the identifications of the corresponding applications together. The physical apparatus 410 or the evaluation apparatus 202 may acquire the first test case and/or the second test case from the memory pool 610 on the basis of the identifications of the first application and/or the second application. In some embodiments, the memory pool 610 may further include more test cases corresponding to other applications.

With continuous reference to Figure 5A, in a block 520, the evaluation apparatus 202 generates a test plan on the basis of the first test case and the second test case. The test plan specifies running processes of the first test case and the second test case in the simulation environment. For example, the test plan can specify the running time, the operation scope, the processing under the output error conditions, etc. of the first test case and the second test case in the whole running process. The generation of the test plan may also be realized by using any currently known or to-be-developed technologies in the field of software testing, and the scope of the disclosure is not limited in this aspect.

In some embodiments, besides providing the test cases which can correspond to the applications, additional test cases may also be provided to monitor an operating system simulated by the simulation environment (for example, the physical apparatus 410), the availability of various resources, etc. These test cases may also be configured to generate the test plan. Therefore, the comprehensive testing of the physical apparatus 120 can be realized.

In a block 530, the evaluation apparatus 202 runs the test plan in the simulation environment to acquire the evaluation result. In an embodiment of configuring the physical apparatus 410 as the simulation environment, the evaluation apparatus 202 can provide the generated test plan to the physical apparatus 410, so that the physical apparatus 410 on which the first application and the second application are installed runs the test plan, and a running result of the test plan is acquired from the physical apparatus 410. In some embodiments, the evaluation apparatus 202 may further function as a control device to trigger the physical apparatus 410 to generate and run the test plan. In the running process of the test plan, the first application and the second application run according to their respective test cases. Specifically, the first application or the second application is input into the test inputs in the first test case or the second test case under the specific running conditions, and the corresponding outputs are recorded to be compared with the specified expected outputs in the test cases. The mismatch of the outputs in the test process and the expected outputs means that the running result of the application does not meet the expectations.

The evaluation apparatus 202 may determine the evaluation result related to the first application on the basis of the running result of the test plan. This can be judged from one or more aspects of the running result. Particularly, whether the running of the second application is normal or not is judged on the basis of the running result, so that whether deploying the first application on the physical apparatus will impact the second application or not is judged. In some embodiments, if the evaluation apparatus 202 needs to evaluate two or more applications on the physical apparatus 120, and the running results indicate that one or more applications therein are impacted, the evaluation apparatus 202 generates a corresponding evaluation result so as to indicate the impact of the deployment of the first application on these specific applications.

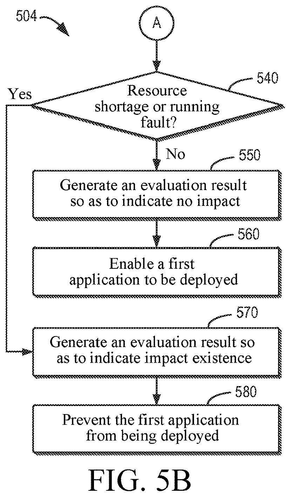

Figure 5B shows a process 504 for generating and utilizing the evaluation result on the basis of the test plan after the process 502 in Figure 5A. The process 504 may also be implemented by the evaluation apparatus 202. In the block 510, the evaluation apparatus 202 determines the evaluation result by determining whether the second application will experience a resource shortage or a running fault or not. The impact of the first application on the second application may be reflected in that the second application does not have sufficient running resources or the normal running of the second application is impacted due to the occupation of resources on the physical apparatus. For example, the first application may require more computing resources or occupy more network connection ports, so that the second application cannot occupy more resources. The resource shortage may impact the running efficiency of the second application, which is not expected. In another example, the running process of the first application may conflict with the running process of the second application, resulting in the running fault of the second application. These conditions may be determined from the running result of the test plan.

If it is determined that the resource requirements of the second application can all be met in a block 540, and the running results are all correct (for example, identical or similar to the expected outputs of the test cases), in a block 550, the evaluation apparatus 202 generates the evaluation result so as to indicate that no impact of deploying the first application to the physical apparatus 120 on the second application. Then, in a block 560, the evaluation apparatus 202 enables the first application to be deployed to the physical apparatus 120. In some embodiments, the evaluation apparatus 202 may trigger the first application to be downloaded from the application server to the physical apparatus. The evaluation apparatus 202 may send the evaluation result indicating no impact or a confirmation response about application deployment to the application server 110. In response to the received evaluation result indicating no impact or the confirmation response, the application server 110 downloads the first application to the physical apparatus 120. Therefore, under the condition of confirming that the deployment of the first application is safe, the first application can be actually deployed to the physical apparatus (for example, downloaded from the application server to the physical apparatus).

If it is determined that the second application will experience a resource shortage or a running fault in the block 540, in a block 570, the evaluation apparatus 202 generates the evaluation result so as to indicate that deploying the first application on the physical apparatus 120 will impact the second application. Under this condition, in 580, the evaluation apparatus 202 prevents the first application from being deployed to the physical apparatus 120. In some embodiments, the evaluation apparatus 202 may send the evaluation result indicating impact existence or a refuse response about application deployment to the application server 110. In response to receiving such an evaluation result or response, the application server 110 may not deploy the first application to the physical apparatus 120. Additionally, the application server 110 may further provide the user 102 with an indication that the first application cannot be deployed, and may further provide the user 102 with the reason that the first application cannot be deployed is that the second application in the physical apparatus 120 will be impacted. The identification of the impacted second application may be provided by the evaluation apparatus 202.

Figure 7 shows a schematic block diagram of an example apparatus 700 which can be configured to implement embodiments of the disclosure. The apparatus 700 can be configured to implement the process 300 of Figure 3, the process 502 of the Figure 5A and/or the process 502 of the Figure 5B. The apparatus 700 may be implemented as the above described evaluation apparatus 202, the physical apparatus 120 or the physical apparatus 410.

As shown in the figure, the apparatus 700 includes a central processing unit (CPU) 701, which can perform various proper actions and processing according to a computer program instruction stored in a read only memory (ROM) 702 or a computer program instruction loaded from a storage unit 708 into a random access memory (RAM) 703. In the RAM 703, various programs and data required for the operation of the apparatus 700 can further be stored. The CPU 701, the ROM 702 and the RAM 703 are connected to each other through a bus 704. An input/output (I/O) interface 705 is also connected to the bus 704.

A plurality of components in the apparatus 700 are connected to the I/O interface 705, including: an input unit 706, for example, a keyboard, a mouse, etc.; an output unit 707, for example, various types of displays, loudspeakers, etc.; a storage unit 708, for example, a magnetic disk, an optical disk, etc.; and a communication unit 709, for example, a network card, a modulator-demodulator, a wireless communication transceiver, etc. The communication unit 709 allows the apparatus 700 to exchange information/data with other apparatuses through a computer network such as Internet and/or various telecommunication networks.

The processing unit 701 performs each method and processing described above, for example, the process 300, the process 502 and/or the process 504. For example, in some embodiments, the process 300, the process 502 and/or the process 504 may be implemented as a computer software program or a computer program product, which is physically included in a computer readable medium, such as a non-transient computer readable medium (for example, the storage unit 708). In some embodiments, a part or all of a computer program may be loaded and/or installed on the apparatus 700 via the ROM 702 and/or the communication unit 709. When the computer program is loaded to RAM 703 and is executed by the CPU 701, one or more steps of the process 300, the process 502 and/or the process 504 described above can be performed. Optionally, in other embodiments, the CPU 701 may be configured to perform the process 300, the process 502 and/or the process 504 in any other proper modes (for example, by virtue of firmware).

A person skilled in the art should appreciate that the steps of the method in the disclosure may be implemented by a general-purpose computer apparatus, and they may be co-located on a single computer apparatus or distributed on a network including multiple computer apparatuses. Optionally, they may be implemented by executing program code on a computer apparatus so that they may be stored in a storage apparatus and executed by a computer apparatus. Alternatively, the steps may be manufactured into a plurality of integrated circuit modules respectively, or multiple modules or steps of them may be manufactured into one single integrated circuit module for implementation. In this way, the disclosure is not limited to any specific combination of hardware and software. For example, some embodiments of the disclosure further include various program module and/or integrated circuit modules, configured to perform one or more steps of the process 300, the process 502, and/or the process 504 and/or one or more other steps described in other embodiments of the disclosure. These program modules may be included or represented in one device, such as the device 700 in FIG. 7.

It should be understood that, although various apparatuses or sub-apparatuses of the device are mentioned in the foregoing detailed description, such division is merely exemplary rather than mandatory. In fact, according to the embodiments of the disclosure, the features and functions of the two or more apparatuses described in this specification may be materialized in one apparatus. On the contrary, the features and functions of one apparatus described above may be further divided into a plurality of apparatuses for materialization.

The foregoing merely describes optional embodiments of the disclosure and is not used for limiting the disclosure. Various modifications and changes may be made to the disclosure by a person skilled in the art, and any modification, equivalent replacement, and improvement made without departing from the spirit and principle of the disclosure shall fall within the protection scope of the disclosure.

## Claims

1. A method for evaluating application deployment, comprising:
acquiring, in response to a request for deploying a first application to a physical apparatus, application information related to the first application and apparatus information related to the physical apparatus, the apparatus information at least indicating an identification of a second application that has been deployed on the physical apparatus;
creating a simulation environment on the basis of the application information and the apparatus information, the simulation environment simulating a running environment of the physical apparatus after the first application and the second application are deployed; and
acquiring, by means of running the first application and the second application in the simulation environment, an evaluation result related to the first application, the evaluation result indicating the impact of deploying the first application to the physical apparatus on the second application.

2. The method according to claim 1, wherein acquiring the evaluation result related to the first application comprises:
determining a first test case and a second test case respectively corresponding to the first application and the second application, the first test case and the second test case respectively specifying test inputs, running conditions and expected outputs of the first application and the second application;
generating a test plan on the basis of the first test case and the second test case, the test plan specifying running processes of the first test case and the second test case in the simulation environment; and
running the test plan in the simulation environment to acquire the evaluation result.

3. The method according to claim 2, wherein at least one of the first test case and the second test case is created and stored in advance.

4. The method according to claim 1, wherein the physical apparatus is a first physical apparatus, creating the simulation environment comprises configuring a second physical apparatus as the simulation environment, and the second physical apparatus is different from the first physical apparatus.

5. The method according to claim 4, wherein configuring the second physical apparatus comprises:
deploying the first application and the second application to the second physical apparatus; and
configuring the second physical apparatus on the basis of the application information and the apparatus information.

6. The method according to claim 1, wherein the application information indicates an identification of the first application and resource requirements of the first application.

7. The method according to claim 1, wherein the apparatus information indicates an available resource of the physical apparatus and an unoccupied resource in the available resource, and the available resource comprises at least one of a computing resource, a storage resource and a communication resource.

8. The method according to claim 1, wherein acquiring the evaluation result related to the first application comprises:
determining, by means of running the first application and the second application in the simulation environment, whether the second application will experience a resource shortage or a running fault or not; and
generating, in response to determining that the second application will experience the resource shortage or the running fault, the evaluation result so as to indicate that deploying the first application on the physical apparatus will impact the second application.

9. The method according to claim 1, further comprising:
deploying, in response to the evaluation result indicating no impact of deploying the first application to the physical apparatus on the second application, the first application to the physical apparatus.

10. The method according to claim 9, wherein deploying the first application to the physical apparatus comprises:
triggering the first application to be downloaded from an application server to the physical apparatus.

11. The method according to claim 1, wherein the physical apparatus is comprised in an Internet of things (IoT) system.

12. An electronic apparatus, comprising:
a processor; and
a memory, coupled with the processor, wherein the memory has an instruction stored therein, when executed by the processor, the instruction enables the electronic apparatus to perform an action, and the action comprises:
acquiring, in response to a request for deploying a first application to a physical apparatus, application information related to the first application and apparatus information related to the physical apparatus, the apparatus information at least indicating an identification of a second application that has been deployed on the physical apparatus;
creating a simulation environment on the basis of the application information and the apparatus information, the simulation environment simulating a running environment of the physical apparatus after the first application and the second application are deployed; and
acquiring, by means of running the first application and the second application in the simulation environment, an evaluation result related to the first application, the evaluation result indicating the impact of deploying the first application to the physical apparatus on the second application.

13. The electronic apparatus according to claim 12, wherein acquiring the evaluation result related to the first application comprises:
determining a first test case and a second test case respectively corresponding to the first application and the second application, the first test case and the second test case respectively specifying test inputs, running conditions and expected outputs of the first application and the second application;
generating a test plan on the basis of the first test case and the second test case, the test plan specifying running processes of the first test case and the second test case in the simulation environment; and
running the test plan in the simulation environment to acquire the evaluation result.

14. The electronic apparatus according to claim 13, wherein at least one of the first test case and the second test case is created and stored in advance.

15. The electronic apparatus according to claim 12, wherein the physical apparatus is a first physical apparatus, creating the simulation environment comprises configuring a second physical apparatus as the simulation environment, and the second physical apparatus is different from the first physical apparatus.

16. The electronic apparatus according to claim 15, wherein configuring the second physical apparatus comprises:
deploying the first application and the second application to the second physical apparatus; and
configuring the second physical apparatus on the basis of the application information and the apparatus information.

17. The electronic apparatus according to claim 12, wherein the application information indicates an identification of the first application and resource requirements of the first application.

18. The electronic apparatus according to claim 12, wherein the apparatus information indicates an available resource of the physical apparatus and an unoccupied resource in the available resource, and the available resource comprises at least one of a computing resource, a storage resource and a communication resource.

19. The electronic apparatus according to claim 12, wherein acquiring the evaluation result related to the first application comprises:
determining, by means of running the first application and the second application in the simulation environment, whether the second application will experience a resource shortage or a running fault or not; and
generating, in response to determining that the second application will experience the resource shortage or the running fault, the evaluation result so as to indicate that deploying the first application on the physical apparatus will impact the second application.

20. The electronic apparatus according to claim 12, wherein the action further comprises: deploying, in response to the evaluation result indicating no impact of deploying the first application to the physical apparatus on the second application, the first application to the physical apparatus.

21. The electronic apparatus according to claim 20, wherein deploying the first application to the physical apparatus comprises:
triggering the first application to be downloaded from an application server to the physical apparatus.

22. The electronic apparatus according to claim 12, wherein the physical apparatus is comprised in an Internet of things (IoT) system.

23. An apparatus for evaluating application deployment, comprising a module configured to perform steps of the method according to any one of claims 1 to 11.

24. A computer program product, wherein the computer program product is physically stored on a computer readable medium, and comprises a computer executable instruction, and when executed, the computer executable instruction enables at least one processor to perform the method according to any one of claims 1 to 11.

25. A computer readable medium, wherein a computer executable instruction is stored thereon, and when executed, the computer executable instruction enables at least one processor to perform the method according to any one of claims 1 to 11.
